**Europäisches Patentamt**

**European Patent Office**

**Office européen des brevets**

(11) Veröffentlichungsnummer: **0 367 331**
**A2**

(12) **EUROPÄISCHE PATENTANMELDUNG**

(21) Anmeldenummer: 89202662.6

(22) Anmeldetag: 23.10.89

(51) Int. Cl.⁵: **G02B 6/38 , G01B 11/27**

(30) Priorität: 29.10.88 DE 3836954

(43) Veröffentlichungstag der Anmeldung:
09.05.90 Patentblatt 90/19

(84) Benannte Vertragsstaaten:
**CH DE FR GB IT LI**

(71) Anmelder: **Philips Patentverwaltung GmbH**
**Wendenstrasse 35 Postfach 10 51 49**
**D-2000 Hamburg 1(DE)**
(84) **DE**

Anmelder: **N.V. Philips' Gloeilampenfabrieken**
**Groenewoudseweg 1**
**NL-5621 BA Eindhoven(NL)**
(84) **CH FR GB IT LI**

(72) Erfinder: **Esser, Hildegard**
**Birresbornerstrasse 55**
**D-5000 Köln 41(DE)**
Erfinder: **Jechalik, Michael**
**Tersteegenweg 24**
**D-4300 Essen 1(DE)**

(74) Vertreter: **Koch, Ingo, Dr.-Ing. et al**
**Philips Patentverwaltung GmbH**
**Wendenstrasse 35 Postfach 10 51 49**
**D-2000 Hamburg 1(DE)**

(54) **Verfahren und Anordnung zur Ermittlung der Lage der optischen Achse eines LWL.**

(57) Die Erfindung bezieht sich auf ein Verfahren zur Ermittlung der Lage der optischen Achse eines LWL relativ zu einer Sollachse, bei welchem die Position eines von einem den LWL verlassenden Lichtstrahl auf einer Detektorfläche gebildeten Lichtflecks relativ zur Sollage ermittelt wird. Eine einfache Ermittlung der Raumlage eines LWL hinsichtlich Wickel- und Laterallage wird dadurch möglich, daß der Lichtstrahl auf in zwei verschiedenen Abständen von der Endfläche des LWL angeordnete Detektorflächen geleitet wird, und daß die Abweichungen der auf den Detektorflächen gebildeten Lichtflecken von ihren Sollagen als Kriterien für den Relativwert der Winkellage und der Laterallage des LWL ausgewertet werden.

Fig.1

## Verfahren und Anordnung zur Ermittlung der Lage der optischen Achse eines LWL

Die Erfindung bezieht sich auf ein Verfahren zur Ermittlung der Lage der optischen Achse eines LWL relativ zu einer Sollachse, bei welchem die Position eines von einem den LWL verlassenden Lichtstrahl auf einer Detektorfläche gebildeten Lichtflecks relativ zur Sollage ermittelt wird.

Die Endbereiche von Lichtwellenleitern (LWL) müssen beispielsweise in Steckerstiften konzentrisch zu dessen Außenmantelfläche mit möglichst geringen Werten von Exzentrizität und Winkelversatz angeordnet sein. Bei einem fertigen Steckerstift muß die Istlage des LWL kontolliert werden können (vgl. Patentanmeldung P 38 10 057.6).

Bei der Herstellung von Steckern kann die Konzentrizität des LWL dadurch erreicht werden, daß der Steckerstift zunächst so ausgerichtet wird, daß die optische Achse des LWL koaxial zu einer Drehachse einer Einspanneinrichtung ausgerichtet wird, wonach die Außenmantelfläche des Steckerstifts spanabhebend koaxial zum LWL nachbearbeitet werden kann (vgl. EP-A 207 552).

Ein Verfahren der eingangs genannten Art ist durch die GB-A 20 82 342 bekannt. Dabei werden die Winkellage und die Laterallage eines LWL relativ zu einer Linsenachse justiert. Während die Laterallage mittels einer Vierquadrantendiode detektiert und nachjustiert werden kann, muß die Winkellage über die Beobachtung des Nahfeld-Abbildes eines durch den LWL geleiteten Lichtstrahls justiert werden. Dazu sind komplizierte optische Bauelemente erforderlich.

Der Erfindung liegt die Aufgabe zugrunde, das Verfahren der eingangs genannten Art derart zu gestalten, daß auf einfache Weise eine Ermittlung der Raumlage eines Endbereichs eines LWL hinsichtlich Winkel- und Laterallage möglich ist.

Die Lösung gelingt dadurch, daß der Lichtstrahl auf in zwei verschiedenen Abständen von der Endfläche des LWL angeordnete Detektorflächen geleitet wird, und daß die Abweichungen der auf den Detektorflächen gebildeten Lichtflecken von ihren Sollagen als Kriterien für den Relativwert der Winkellage und der Laterallage des LWL ausgewertet werden.

Es zeigte sich, daß mittels nur eines Detektors, welcher in einem bestimmten Abstand zur Endfläche des LWL angeordnet ist, weder die Winkellage des LWL noch dessen Exzentrizität eindeutig ermittelt werden können. Die Lage des Lichtflecks auf einem Detektor hängt nämlich sowohl von der Exzentrizität der Endfläche des LWL als auch von der Winkellage des Endbereichs des LWL ab. Eine Exzentrizität "Null" kann z.B. fälschlich ermittelt werden, wenn eine tatsächlich vorhandene Exzentrizität von einem solchen Winkelversatz des Endbereichs des LWL überlagert ist, daß der Lichtfleck auf die Mitte des Detektors geleitet wird.

Bei der erfindungsgemäßen Lösung würde in einem solchen Fall auf der im anderen Abstand angeordneten Detektorfläche ein Lichtfleck erscheinen, welcher anders als bei der ersten Detektorfläche nicht in der Sollage liegt. Aus den Ausgangssignalen beider Detektoren läßt sich eindeutig die genaue Raumlage des LWL-Endbereichs ermitteln und gegebenenfalls korrigieren.

Eine genau konzentrische Lage des LWL wird dann ermittelt, wenn die Lichtflecken auf beiden Detektoren in der Sollage liegen.

Gemäß einer Ausführungsart ist es möglich, daß ein Detektor in Richtung der optischen Sollachse von einer ersten in eine zweite Abstandslage zur Endfläche des LWL verschoben wird. Dann wird nur ein einziger Detektor benötigt.

Wenn zwei über einen Strahlteiler gebildete Teilstrahlen des Lichtstrahls auf je einen Detektor geleitet werden, kann auf eine Verschiebbarkeit eines Detektors verzichtet werden.

Eine besonders vorteilhafte Weiterbildung des Verfahrens ist dadurch gekennzeichnet, daß in Abhängigkeit von den Detektorausgangssignalen Stellbewegungen zur koaxialen Ausrichtung der optischen Achse des LWL in die Sollachse erzeugt werden. Die Stellbewegungen können automatisch durch die Ausgangssignale der Detektoren bewirkt werden.

Eine Anordnung zur Ausübung des erfindungsgemäßen Verfahrens ist dadurch gekennzeichnet, daß ein optischer Detektor zur Erfassung des Lichtstrahls von einer ersten Abstandslage in Richtung der optischen Sollachse in eine zweite Abstandslage verschiebbar ist, und daß das Ausgangssignal des Detektors einer Einrichtung zugeführt ist, welche den Unterschied zwischen der jeweiligen Istlage und der Sollage des Lichtflecks in den Koordinatenrichtungen der Detektorfläche ermittelt.

Eine vorteilhafte Abwandlung einer solchen Anordnung ist dadurch gekennzeichnet, daß im Wege des Lichtstrahls ein Strahlteiler angeordnet ist, daß Teilstrahlen auf zwei in verschiedenem Abstand von der LWL-Endfläche angeordnete optische Detektoren geleitet sind, deren Ausgangssignale Einrichtungen zugeführt sind, welche den Unterschied zwischen der jeweiligen Istlage und der Sollage des Lichtflecks in den Koordinatenrichtungen der Detektorflächen ermitteln. Dabei ist kein auf einer Achsenbahn genau verschiebbarer Detektor erforderlich.

Für die Erfindung werden Detektoren bevorzugt, welche Vierquadrantenelemente (Vierquadrantendioden, CCD-Chips) sind, welche elektrische Ausgangssignale von in vier Quadranten bzw. vier um 90° gegeneinander verschoben Richtungen detektierten Lichtintensitäten bilden.

Für gewisse Anwendungsfälle ist eine Lösung besonders geeignet, bei welcher die Detektoren exzentrisch um die Sollachse relativ zum LWL drehbar sind. Dabei ist es natürlich physikalisch gleichgültig, ob der LWL bei festem Detektor oder der Detektor bei raumfestem LWL um die Sollachse gedreht werden.

Die Erfindung wird anhand eines in der Zeichnung dargestellten vorteilhaften Anwendungsbeispiels erläutert.

Figur 1 zeigt die Prinzipanordnung einer Anordnung zur Ausübung des erfindungsgemäßen Verfahrens

Figur 2 zeigt eine für die Erfindung vorteilhafte Ausführungsform eines Detektors

Figur 3 zeigt eine weitere vorteilhafte Ausführungsform eines Detektors

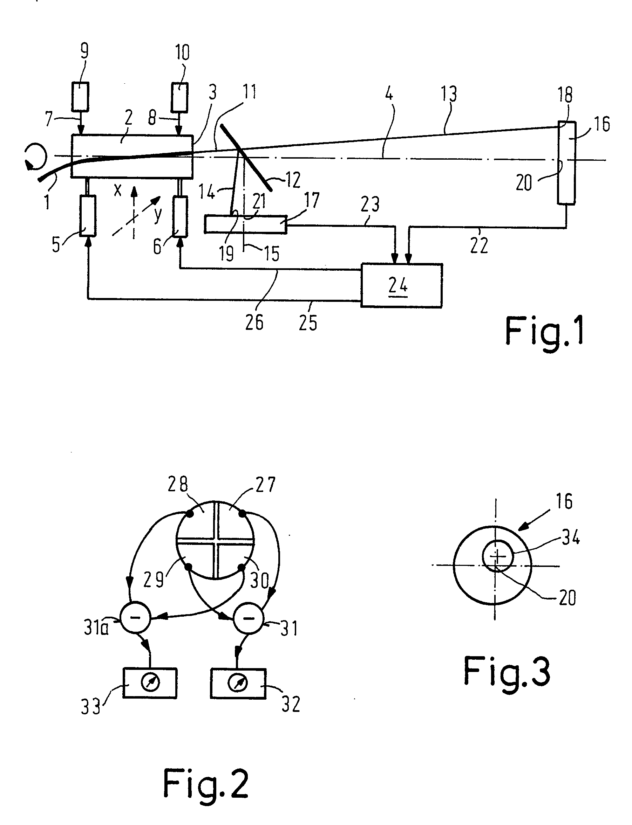

Die in Fig. 1 schematisch dargestellte Anordnung dient zur Ermittlung bzw. Vermessung der Lage eines LWL 1, welcher in einen Steckerstift 2 fest eingefügt ist. Der LWL 1 endet an der Stirnfläche 3 des Steckerstifts 2 mit einer möglichst klein zu haltenden Exzentrizität, d.h. möglichst genau mittig. Ferner kann die optische Achse des LWL 1 zur Mittelachse des Steckerstifts 2 geneigt sein. In Fig. 2 sind diese Neigung und die Exzentrizität stark übertrieben gezeichnet.

Der Steckerstift 2 ist drehbar in eine nicht dargestellte Drehhalterung eines Präzisionswerkzeugs eingespannt, wobei zunächst die Drehachse und die Mittelachse des Steckerstifts 2 weitgehend identisch sind. Die Drehachse entspricht der gestrichelt gezeichneten Sollachse 4, in welche die optische Achse des LWL 1 mittels der Manipulatoren 5 und 6 gebracht werden soll. Dabei kann die Lage der Steckerhülse 2 in ihrer Drehhalterung an beiden Enden unabhängig voneinander in x- und y-Richtung verschoben werden.

Wenn der LWL 1 genau in der optischen Sollachse 4 liegt und somit auch in der Drehachse des Präzisionswerkzeuges, hat die Außenmantelfläche des Steckerstifts 2 die Neigung und Exzentrizität zur Drehachse, welche vorher der LWL 1 relativ zu dieser Außenfläche hatte. Mittels an den Enden des Steckerstifts 2 angreifender Taster 7 und 8 von Abstandsfühlern 9 und 10 können dann bei Drehung der Drehhalterung des Präzisionswerkzeugs die Lage der Umfangskreise an den betreffenden Taststellen relativ zur Drehachse ermittelt werden. Aus den Lagedaten dieser Umfangskreise können die Werte der Exzentrizität und der Schieflage des LWL 1 errechnet werden. Einzelheiten dieses vereinfacht dargestellten Meßverfahrens sind in der Patentanmeldung P 38 10 057.6 beschrieben.

Gegenstand der vorliegenden Erfindung ist ein Verfahren zur Ermittlung der Istlage des LWL relativ zur optischen Sollachse 4. Dazu wird durch den LWL 1 elektromagnetische Strahlung, insbesondere Licht geleitet, welches aus der Stirnfläche des Steckerstifts 2 bzw. des LWL 1 als Strahl 11 austritt, welcher durch den Strahlteiler 12 (z.B. halbdurchlässiger Spiegel) in einen direkten Teilstrahl 13 und einen abgelenkten Teilstrahl 14 aufgeteilt wird. Wenn der LWL zur optischen Sollachse 4 ausgerichtet ist, verläuft der direkte Teilstrahl 13 in der optischen Sollachse 4 und der abgelenkte Teilstrahl 14 in der Ablenkungssollachse 15.

Die optischen Detektoren 16 und 17 bilden elektrische Ausgangssignale, welche Informationen über die Istlage der Auftreffpunkte 18 bzw. 19 der Teilstrahlen 13 bzw. 14 auf die lichtempfindlichen Flächen der Detektoren 16 bzw. 17 relativ zu den durch die Sollachsen 4 bzw. 15 definierten Mittelpunkten 20 bzw. 21 enthalten. Diese Ausgangssignale werden über die Leitungen 22 bzw. 23 dem Steuerrechner 24 zugeführt, welcher dann Betätigungssignale über die Leitungen 25 bzw. 26 an die Manipulatoren 5 bzw. 6 gibt.

Wenn die Detektoren als Vierquadrantendioden nach Figur 2 ausgebildet sind, können vollständige Informationen über die gerichteten Abstände zwischen den Punkten 18 und 20 bzw. 19 und 21 ohne Drehung der Drehhalterung des Präzisionswerkzeugs erhalten werden. Die lichtempfindlichen Segmente 27, 28, 29 und 30 liefern unabhängig voneinander der auf sie fallenden Lichtintensität proportionale elektrische Ausgangssignale. Die Differenz der Ausgangssignale diagonal gegenüberliegender Segmente (27,29 bzw. 28 und 30) sind ein Maß für die Lagekoordinaten der Punkte 18 bzw. 19, wenn die Mittelpunkte der Vierquadrantendioden auf die Punkte 20 bzw. 21 ausgerichtet sind.

Selbstverständlich treffen die Strahlen 13 bzw. 14 nicht punktförmig auf die Detektoren 16 bzw. 17 auf, sondern mit einem Lichtfleck. Die Größe dieses Lichtflecks kann durch in den Strahlgang der Strahlen 11 oder 13 bzw. 15 eingefügte Linsen beeinflußt werden.

Die von den Substraktionselementen 31 bzw. 31a gebildeten Differenzsignale können über Anzeigeelemente 32 bzw. 33 als Lagekoordinaten der Punkte 18 bzw. 19 angezeigt werden.

Der Detektor 16 (ebenso wie der Detektor 17) kann auch gemäß Fig. 3 ausgebildet sein. Ein zu einer nicht dargestellten Fotodiode führender Detektor-LWL 34 ist exzentrisch zur optischen Sollachse 4 bzw. zum Punkt 20 ausgerichtet. Die Ausgangssignale der Fotodioden werden winkelabhängig bei Drehung der Drehhalterung für den Steckerstift 3 erfaßt und können zur Ermittlung der Lagekoordinaten der Auftreffpunkte 18 bzw. 19 der Teilstrahlen 13 bzw. 14 ausgewertet werden. Dabei sind in vier um 90° verschobenen Drehstellungen ermittelte Werte ausreichend, wobei dann gleichsam das anhand Fig. 2 beschriebene Prinzip der Vierquadrantendiode nachgebildet wird.

**Ansprüche**

1. Verfahren zur Ermittlung der Lage der optischen Achse eines LWL (1) relativ zu einer Sollachse (4), bei welchem die Position eines von einem den LWL (1) verlassenden Lichtstrahl (11) auf einer Detektorfläche gebildeten Lichtflecks (18,19) relativ zur Sollage (20,21) ermittelt wird, dadurch gekennzeichnet, daß der Lichtstrahl (11) auf in zwei verschiedenen Abständen von der Endfläche des LWL (1) angeordnete Detektorflächen (16,17) geleitet wird, und daß die Abweichungen der auf den Detektorflächen gebildeten Lichtflecken (18,19) von ihren Sollagen (20,21) als Kriterien für den Relativwert der Winkellage und der Laterallage des LWL (1) ausgewertet werden.

2. Verfahren nach Anspruch 1, dadurch gekennzeichnet, daß ein Detektor (16,17) in Richtung der optischen Sollachse (4,15) von einer ersten in eine zweite Abstandslage zur Endfläche des LWL (1) verschoben wird.

3. Verfahren nach Anspruch 1, dadurch gekennzeichnet, daß zwei über einen Strahlteiler (12) gebildete Teilstrahlen (13,14) des Lichtstrahls (11) auf je einen Detektor (16 bzw. 17) geleitet werden.

4. Verfahren nach einem der Ansprüche 1 bis 3, dadurch gekennzeichnet, daß in Abhängigkeit von den Detektorausgangssignalen Stellbewegungen zur koaxialen Ausrichtung der optischen Achse des LWL (1) in die Sollachse (4) erzeugt werden.

5. Anordnung zur Ermittlung der Lage der optischen Achse eines LWL (1) relativ zu einer Sollachse (4), mittels welcher die Position eines von einem den LWL (1) verlassenden Lichtstrahl auf einer Detektorfläche gebildeten Lichflecks (18,19) relativ zur Solllage (20,21) ermittelbar ist, dadurch gekennzeichnet, daß ein optischer Detektor (16 bzw. 17) zur Erfassung des Lichtstrahls (13 bzw. 14) von einer ersten Abstandslage in Richtung der optischen Sollachse (4 bzw. 15) in eine zweite Abstandslage verschiebbar ist, und daß das Ausgangssignal des Detektors (16 bzw. 17) einer Einrichtung (24) zugeführt ist, welche den Unterschied zwischen der jeweiligen Istlage (18 bzw. 19) und der Sollage (20 bzw. 21) des Lichtflecks in den Koordinatenrichtungen der Detektorfläche ermittelt.

6. Anordnung zur Ermittlung der Lage der optischen Achse eines LWL (1) relativ zu einer Sollachse (4), mittels welcher die Position eines von einem den LWL (1) verlassenden Lichtstrahl auf einer Detektorfläche gebildeten Lichtflecks (18,19) relativ zur Solllage (20,21) ermittelbar ist, dadurch gekennzeichnet, daß im Wege des Lichtstrahls (11) ein Strahlteiler (12) angeordnet ist, daß Teilstrahlen (13,14) auf zwei in verschiedenem Abstand von der LWL-Endfläche angeordnete optische Detektoren (16,17) geleitet sind, deren Ausgangssignale Einrichtungen (24,32,33) zugeführt sind, welche den Unterschied zwischen der jeweiligen Istlage (18,19) und der Sollage (20,21) des Lichflecks in den Koordinatenrichtungen der Detektorflächen ermitteln.

7. Anordnung nach Anspruch 5 oder 6, dadurch gekennzeichnet, daß die Detektoren (16,17) Vierquadrantenelemente (Vierquadrantendioden, CCD-Chips) sind, welche elektrische Ausgangssignale von in vier Quadranten (27,28,29,30) bzw. in vier um 90° gegeneinander verschobenen Richtungen detektierten Lichtintensitäten bilden.

8. Anordnung nach Anspruch 5 oder 6, dadurch gekennzeichnet, daß die Detektoren (16,17) exzentrisch um die Sollachse (4,15) relativ zum LWL (1) drehbar sind.

Fig.1

Fig.2

Fig.3